# EUROPEAN PATENT APPLICATION

(11) **EP 4 633 120 A1**
(43) Date of publication of application: **15.10.2025**
(21) Application number: 25164380.5
(22) Date of filing: 18.03.2025
(51) Int. Cl.: H04L 69/24

(54) **NETWORK OF NETWORKS**

(30) Priority: 12.04.2024 FI 20245460
(71) Applicant: Nokia Solutions and Networks Oy, 02610 Espoo (FI)
(72) Inventor: MORPER, Hans-Jochen, 85253 Erdweg (DE); HOPPE, Sandra, 81541 Munich (DE)
(74) Representative: Nokia EPO representatives

(57) **Abstract**

Method comprising
reading, from each of plural networks, a first capability indication exposed by the respective network, wherein the first capability indication exposed by the respective network indicates a first capability the respective network is capable to provide to a first host if the first host attaches to the respective network;
checking, for each of the plural networks, whether the first capability the respective network is capable to provide matches a required first capability of a first application of the first host;
instructing that the first host is attached to a first one of the plural networks in response to checking that the first capability the first one of the plural networks is capable to provide matches the required first capability of the first application of the first host.

## Description

### Technical Field

The present disclosure relates to a network of networks.

### Abbreviations

- 3GPP: 3^{rd} Generation Partnership Project
- 4G/5G/6G: 4^{th}/5^{th}/6^{th} Generation
- EC: Engine Control
- HTTP: Hypertext Transfer Protocol
- IP: Internet Protocol
- KPI: Key Performance Indicator
- L1/L2/L3: Layer 1 / Layer 2 / Layer 3
- NoN: Network of Networks
- NPA: Non-profit altruistic broker
- OAM: Operation and Maintenance System
- OPC-UA: Open Platform Communications - Unified Architecture
- OSI: Open Systems Interconnection
- PHY: Physical layer
- PON: Passive Optical Network
- QUIC: Quick UDP Internet Connections
- RAN: Radio Access Network
- RC: Resource control
- TLS: Transport Layer Security
- UDP: User Datagram Protocol
- VoD: Video on Demand
- WiFi: Wireless Fidelity

### Background

Nowadays networks provide high performance to their hosts but still some improvement is recommendable.

### Summary

It is an object to improve the prior art.

According to a first aspect, there is provided an apparatus comprising
means for calculating (110) an exposed capability of a first network based on a capability inherent to the first network and a capability of a second network the first network is connected to;
means for exposing (120) the exposed capability of the first network at a northbound interface of the first network.

The first network may be stacked on the second network.

The first network and the second network may be in parallel at a same layer.

The first network may be capable to provide at least one of:
- a respective communication path from a first host to a second host if the first host is attached to the first network, or
- the first network and the second network are jointly capable to provide a respective communication path from the first host to a third host through the first network and the second network if the first host is attached to the first network.

According to a second aspect, there is provided an apparatus comprising
means for reading, from each of plural networks, a first capability indication exposed by the respective network, wherein the first capability indication exposed by the respective network indicates a first capability the respective network is capable to provide to a first host if the first host attaches to the respective network;
means for checking, for each of the plural networks, whether the first capability the respective network is capable to provide matches a required first capability of a first application of the first host;
means for instructing that the first host is attached to a first one of the plural networks in response to checking that the first capability the first one of the plural networks is capable to provide matches the required first capability of the first application of the first host.

The apparatus may further comprise
means for inhibiting the instructing that the first host is attached to the first one of the plural networks in response to checking that the first capability the first one of the plural networks is capable to provide does not match the required first capability of the first application of the first host.

The first capability the first one of the plural networks is capable to provide may match the required first capability of the first host if the first capability the first one of the plural networks is capable to provide is equal to or better than the required first capability of the first application of the first host.

The apparatus may further comprise
means for monitoring whether the means for checking checks, for each of the plural networks, that the first capability the respective network is capable to provide does not match the required first capability of the first application of the first host;
means for ordering the first host to reduce the required first capability of the first application of the first host to a reduced required first capability such that the first capability the first one of the plural networks is capable to provide matches the reduced required first capability in response to monitoring that the means for checking checks, for each of the plural networks, that the first capability the respective network is capable to provide does not match the required first capability of the first application of the first host;
   means for supervising whether a confirmation is received that the first host reduces the required first capability to the reduced required first capability; wherein
the means for instructing is configured to instruct that the first host is attached to the first one of the plural networks in response to receiving the confirmation that the first host reduces the required first capability to the reduced required first capability.

The apparatus may further comprise
means for commanding the first host to stop the first application on the first host requiring at least a portion of the required first capability in response to supervising that the confirmation is not received.

The apparatus may further comprise
means for monitoring whether the means for checking checks, for each of the plural networks, that the first capability the respective network is capable to provide does not match the required first capability of the first application of the first host;
means for commanding the first host to stop the first application on the first host requiring at least a portion of the required first capability in response to monitoring that the means for checking checks, for each of the plural networks, that the first capability the respective network is capable to provide does not match the required first capability of the first application of the first host.

The means for reading may be configured to read, from each of the plural networks, a second capability indication exposed by the respective network, wherein the second capability indication exposed by the respective network indicates a second capability the respective network is capable to provide to the first host if the first host attaches to the respective network;
the means for checking may be configured to check, for each of the plural networks, whether the second capability the respective network is capable to provide matches a required second capability of a second application of the first host;
the means for instructing may be configured to instruct that the first host is attached to a second one of the plural networks in response to checking that the second capability the second one of the plural networks is capable to provide matches the required second capability of the second application of the first host;
the second one of the plural networks may be different from the first one of the plural networks.

For each of the plural networks, the first capability the respective network is capable to provide may comprise providing a communication path from the first host to a second host if the first host is attached to the respective network.

According to a third aspect, there is provided a method comprising
calculating an exposed capability of a first network based on a capability inherent to the first network and a capability of a second network the first network is connected to;
exposing the exposed capability of the first network at a northbound interface of the first network.

The first network may be stacked on the second network.

The first network and the second network may be in parallel at a same layer.

The first network may be capable to provide at least one of:
- a respective communication path from a first host to a second host if the first host is attached to the first network, or
- the first network and the second network are jointly capable to provide a respective communication path from the first host to a third host through the first network and the second network if the first host is attached to the first network.

According to a fourth aspect, there is provided a method comprising
reading, from each of plural networks, a first capability indication exposed by the respective network, wherein the first capability indication exposed by the respective network indicates a first capability the respective network is capable to provide to a first host if the first host attaches to the respective network;
checking, for each of the plural networks, whether the first capability the respective network is capable to provide matches a required first capability of a first application of the first host;
instructing that the first host is attached to a first one of the plural networks in response to checking that the first capability the first one of the plural networks is capable to provide matches the required first capability of the first application of the first host.

The method may further comprise
inhibiting the instructing that the first host is attached to the first one of the plural networks in response to checking that the first capability the first one of the plural networks is capable to provide does not match the required first capability of the first application of the first host.

The first capability the first one of the plural networks is capable to provide may match the required first capability of the first host if the first capability the first one of the plural networks is capable to provide is equal to or better than the required first capability of the first application of the first host.

The method may further comprise
monitoring whether the means for checking checks, for each of the plural networks, that the first capability the respective network is capable to provide does not match the required first capability of the first application of the first host;
ordering the first host to reduce the required first capability of the first application of the first host to a reduced required first capability such that the first capability the first one of the plural networks is capable to provide matches the reduced required first capability in response to monitoring that the means for checking checks, for each of the plural networks, that the first capability the respective network is capable to provide does not match the required first capability of the first application of the first host;
supervising whether a confirmation is received that the first host reduces the required first capability to the reduced required first capability; wherein
instructing is configured to instruct that the first host is attached to the first one of the plural networks in response to receiving the confirmation that the first host reduces the required first capability to the reduced required first capability.

The method may further comprise
commanding the first host to stop the first application on the first host requiring at least a portion of the required first capability in response to supervising that the confirmation is not received.

The method may further comprise
monitoring whether the means for checking checks, for each of the plural networks, that the first capability the respective network is capable to provide does not match the required first capability of the first application of the first host;
commanding the first host to stop the first application on the first host requiring at least a portion of the required first capability in response to monitoring that the means for checking checks, for each of the plural networks, that the first capability the respective network is capable to provide does not match the required first capability of the first application of the first host.

The reading may comprise reading, from each of the plural networks, a second capability indication exposed by the respective network, wherein the second capability indication exposed by the respective network indicates a second capability the respective network is capable to provide to the first host if the first host attaches to the respective network;
the checking may comprise checking, for each of the plural networks, whether the second capability the respective network is capable to provide matches a required second capability of a second application of the first host;
the instructing may comprise instructing that the first host is attached to a second one of the plural networks in response to checking that the second capability the second one of the plural networks is capable to provide matches the required second capability of the second application of the first host;
the second one of the plural networks may be different from the first one of the plural networks.

For each of the plural networks, the first capability the respective network is capable to provide may comprise providing a communication path from the first host to a second host if the first host is attached to the respective network.

The methods of each of the third and fourth aspects may be a method of operating a network of networks.

According to a fifth aspect, there is provided a computer program product comprising a set of instructions which, when executed on an apparatus, is configured to cause the apparatus to carry out the method according to any of the third or fourth aspects. The computer program product may be embodied as a computer-readable medium or directly loadable into a computer.

According to some example embodiments, at least one of the following advantages may be achieved:
- Network resources may be better exploited;
- Total energy consumption may be reduced;
- Digital partake across societies may be improved.

### Brief description of the drawings

Further details, features, objects, and advantages are apparent from the following detailed description of the preferred example embodiments which is to be taken in conjunction with the appended drawings, wherein:
Fig. 1 shows a NoN according to some example embodiments;
Fig. 2 illustrates a definition of a network and a host according to some example embodiments;
Fig. 3 shows a layered structure of a NoN;
Fig. 4 shows requirements of difference services to be fulfilled by the NoN;
Fig. 5 shows KPIs offered by different layers of a NoN;
Fig. 6 shows the nomenclature used in the present application;
Fig. 7 corresponds to Fig. 3, additionally indicating the offered KPIs;
Fig. 8 shows an example embodiment prior to handover from the left network to the right network;
Fig. 9 shows an example embodiment after handover from the left network to the right network;
Fig. 10 shows the example embodiment of Fig. 8 in a network layer view;
Fig. 11 shows the example embodiment of Fig. 9 in a network layer view;
Fig. 12 shows an apparatus according to an example embodiment;
Fig. 13 shows a method according to an example embodiment;
Fig. 14 shows an apparatus according to an example embodiment;
Fig. 15 shows a method according to an example embodiment; and
Fig. 16 shows an apparatus according to an example embodiment.

### Detailed description of certain example embodiments

Herein below, certain example embodiments are described in detail with reference to the accompanying drawings, wherein the features of the example embodiments can be freely combined with each other unless otherwise described. However, it is to be expressly understood that the description of certain example embodiments is given by way of example only, and that it is by no way intended to be understood as limiting the disclosure to the disclosed details.

Moreover, it is to be understood that the apparatus is configured to perform the corresponding method, although in some cases only the apparatus or only the method are described.

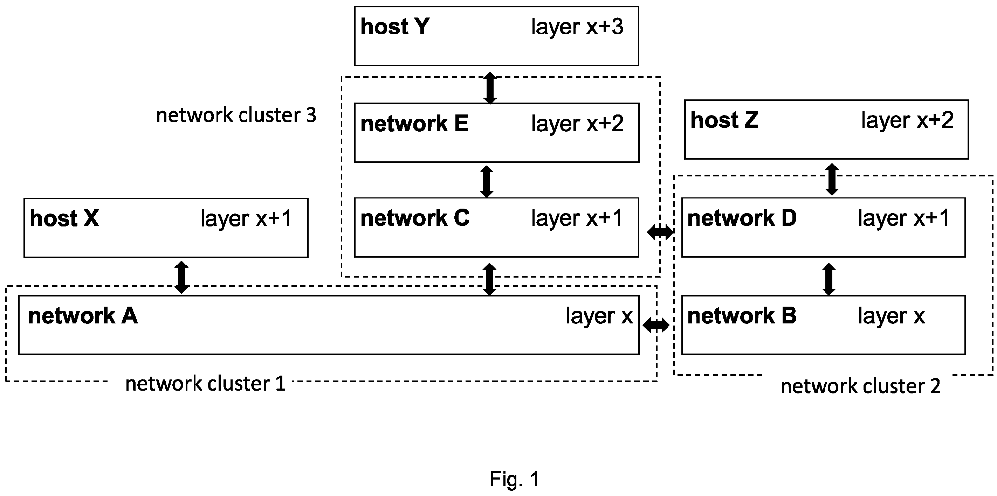

Fig. 1 shows an example of a network of networks. In the example, the network of networks comprises 4 layers x, x+1, x+2, and x+3, but the number of layers in a NoN is not limited. In the example, the bottom layer x comprises two networks (network A and network B), but the number of networks per layer is not limited. Network A and network B are connected to each other. In some NoN, all networks of a same layer of the NoN are directly connected with each other, while in other NoN, one or more networks of the same layer of the NoN are not directly connected to each of the other networks of the same layer of the NoN.

The networks are stacked with respect to protocol layers. For example, the networks may be stacked according to OSI layers. The meaning of layering is not limited to pure ISO/OSI layering. OSI layering may be a comprehensive [and in some cases beneficial] implementation option. Here are some examples for potential layering flavors (no completeness claimed):
- *OSI-layering:* a routed network may run on top of a layer 2 (Ethernet) network. The routed network may be considered as a layer 3 and the transport network as layer 2.
- *Service layering*: content services (e.g., VoD) may be offered by a routed network which may (or may not) be vertically (northbound/southbound) connected to another routed network and horizontally connected to other service networks, e.g., via IP/HTTP3/QUIC.
- *Secure Bridged Networks*: different networks may offer different security levels, e.g., ranging from TLS security to PHY-based post-quantum-save security. Consequently, networks offering the same security level may be considered as "horizontal" or "same layer" while networks with a weaker security level may be considered as "layer x-y" and networks with a higher security level may be considered as "layer x+y".

For ease of understanding, the following descriptions assume an OSI-like layering but the example may be adapted to other flavors of layering, too.

In Fig. 1, host X is attached to the network A. Each host is attached to at least one of the networks of the NoN. Plural hosts may be attached to a same network of the NoN. The one or more hosts attached to a network of the NoN form a layer on top of the layer of the respective network. In the example of Fig. 1, host X is on layer x+1. Typically, a host is not directly connected to other hosts of a same layer, but in some examples, a host may be connected to another host of the same layer. A higher layer network or higher layer host is not attached to the host; i.e., a host is the top element of a stack of networks of the NoN. A host uses one or more services of and/or offered via the network of networks.

In addition, in Fig. 1, a network cluster 3 comprising network C and network E on top of network C is attached to the network A. I.e., network C is directly attached to network A, while network E is directly attached to network C. The number of networks in a network cluster is not limited. The network A may be considered conceptually as a network cluster 1 comprising a single network. Each network exposes its interfaces to the respective peering networks. In some cases (e.g. in case of an incumbent operator owing networks of plural layers), some of the networks forming a cluster expose their interfaces only to the networks of the network cluster on top of it but not to other networks (networks not belonging to the cluster) on top of it. For example, network B belonging to the network cluster 2 does not expose its interface to the network C belonging to the network cluster 3 but not to the network cluster 2.

A host Y is attached to network E and, thus, to the network cluster 3. The host Y belongs to the layer x+3.

In Fig. 1, a network cluster 2 comprises a network B on layer X and a network D on layer x+1. Networks B and D are directly connected with networks A and C, respectively. A host Z is attached to network D and, thus, to the network cluster 2. The host Z belongs to the layer x+2.

The networks may be fixed (wired) networks or wireless networks (e.g. cellular networks, such as 3GPP networks; WiFi networks, Bluetooth networks) and may belong to different OSI layers (layer 1, layer 2, layer 3,...).

The networks of a NoN may interconnect vertically and/or horizontally. By this, a layered NoN will result with a [potentially] unlimited number of layers. Some of these networks may offer northbound interfaces for other networks or hosts to connect. The process of [southbound] connecting of a layer x+1 network to a layer x network and the connecting of a layer x+1 host to a layer x network are referenced as "attachment". From a pure layering view, attaching of hosts and attaching of networks are alike, however, w.r.t. to OAM, NoN-management and attachment rates (how often an attachment takes place), there are significant differences:
- the attachment rates of hosts are much higher (more frequent) e.g., due to mobility
- attaching of networks results in service offerings (KPI), i.e., networks will offer [service] KPI based on their own and inherited KPI via their northbound interface(s), while hosts select their point of attachment based on their service needs
- the NoN control or NoN-management may distinguish between hosts and networks: Hosts are the end-points of a e2e connection, whereas networks are path elements of an e2e connection; the NoN-control will compile and store different paths between hosts via suitable networks of the NoN.
- Hosts (e.g., service client) communicate with other hosts (e.g., service server) only on a service level. If, e.g., for administrational issues, hosts will have a service communication with a network, this network is considered to also appear as host in the NoN.

From a layering perspective, both flavors of attachment are of a same kind, especially when a host will convert into a network (and vice versa).

When networks of a NoN connect to other networks of the same NoN, either vertically or horizontally, the peering networks may exchange information. The information may comprise one or more of the following, for example:
- KPI the network is guaranteeing for the interface affected (e.g., northbound) in general or w.r.t other interfaces (e.g., there may be different KPI offerings for different peering interfaces)
- Address ranges (e.g., routes, e.g., IP-routes) than can be accessible via the affected interface at given KPI.
- Security contexts (e.g., what level of security is provided/demanded)
- black lists of services, addresses

This information exchange may happen at least as part of the attachment process but may also be triggered more frequently. The information may be conveyed as signaling information with appropriate functions on either side of the interface, either via a signaling plane (control plane) or as part of the data plane (in-band, user plane). Existing protocols that could be employed for this data exchange are e.g., OPC-UA or HTTP3/QUIC.

Some example embodiments may be described as follows:
A network of networks comprising a multitude of data and communication networks (fixed, wireless, optical, public or private, data centers, processing capabilities) which provide connections to adjacent networks at given protocol layers x (e.g., OSI layer 1,2,3, e.g., radio, optical, ethernet, IP), where connections to networks at the same layer are provided by horizontal interfaces (eastbound/westbound), where connections to networks and hosts at higher layers (x+1, x+y) are provided via (vertical) northbound interfaces, where connections to networks at lower layers (x-1, x-y) are provided by (vertical) southbound interfaces,
whereas each network communicates its KPI (key performance parameters, e.g., bandwidth, delay, operational performance) which it is able to provide over a given interface (horizontal or vertical) via or alongside of said interface,
whereas the KPI communicated via or alongside of interfaces will be calculated based on the capabilities of said network and one or more KPIs received via interfaces to adjacent networks according to rules.

Some example embodiments may be described as follows:
A network of networks comprising a multitude of networks, where selections of networks form one or more network clusters,
whereas each network cluster indicates its KPI via horizontal and vertical interfaces to adjacent networks or network clusters.

Some example embodiments may be described as follows:
A host connected to a network of network via a (vertical) southbound interface at layer x which is corresponding to a northbound (vertical) interface at layer x-1 of a network which is part of a network of networks, the host having explicit requirements (KPI) on the network it intends to attach to, with the requirements resulting from applications that are implemented or running at said host,
whereas the host selects a network to attach to by comparing its requirements on KPI with the KPI that are communicated by a network via or alongside a northbound interface suitable to attach hosts,
whereas the host, if no network with matching KPI is available, will modify its own KPI (e.g., downgrade) to a degree which will still allow to run the applications,
whereas the host, if there is no network available matching all KPI parameters will connect to different networks such that applications will be served via different networks with each network fulfilling KPI according to the applications' need,
whereas the host, if there is no network available that supports KPI of specific applications will inform the application and stop the application from executing.

Some example embodiments may be described as follows:
A network of networks comprising of resources from a multitude of networks with each network of the network of networks contributing resources (e.g., unused resources) to a pool of resources, permanently or for a given period of time, the resources comprising of transport (optical, L2, L3 switching or routing) radio access (e.g. 3G/4G/5G RAN and core, WiFi), processing / data centers where each of the resources is provided with information allowing to access and configure the [use of] said resources,
whereas the network of networks comprises the resource pool which is operated by an incumbent operator,
whereas the network of networks is operated by a broker,
whereas the network of networks is operated broker-less,
whereas the network of networks is operated by a non-profit altruistic broker NPA,
whereas the network of networks is setup / implemented by an NPA and turns into a broker-less mode at a later point in time
whereas the network of networks is used to share resources between network providers allowing for more sustainable resource efficient operation,
whereas the network of networks is used to create a new communication network [citizen network],
whereas a network of networks is used to allow for efficient resource sharing between network providers and provision of a [new] network service

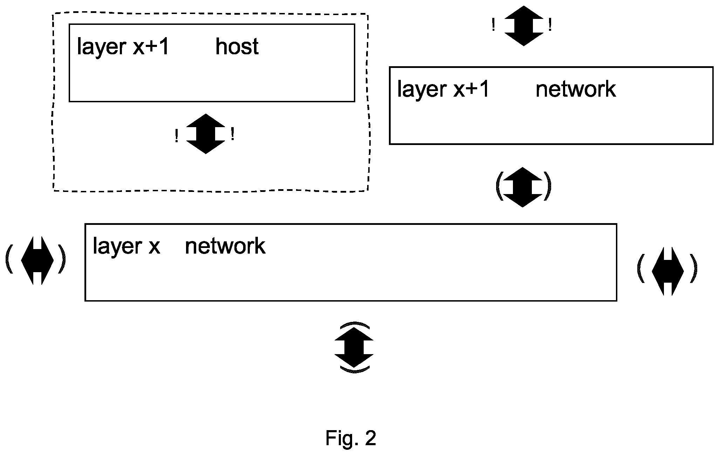

Fig. 2 shows a relationship between networks and hosts of a NoN: a network has a northbound interface to allow hosts (or other networks) to attach. A network may have a southbound interface and it may have east/westbound interfaces (e.g., to adjacent networks of the same layer). A host has a southbound interface (e.g., a radio interface, in the example that the host is a UE).

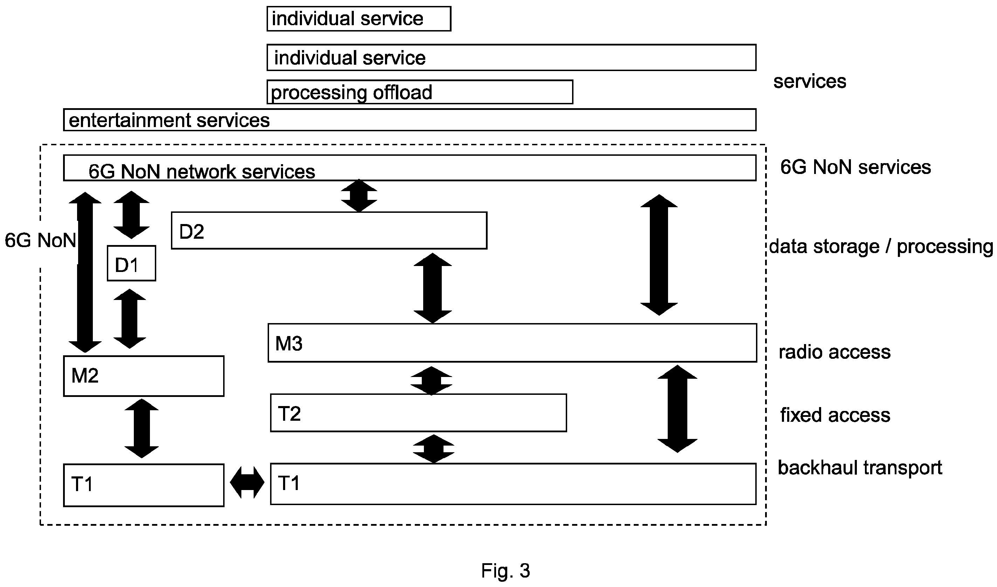

Fig. 3 illustrates an example of the layering of a NoN, ranging from the application layers (individual services, processing offload, entertainment) down to the different networking layers: D1/D2 for data center layers, M2 / M3 for mobile radio access, T1/T2 for fixed transport. A NoN may offer an additional layer for NoN-specific services (e.g. location information, etc., denoted as "6G NoN network services" in Fig. 3).

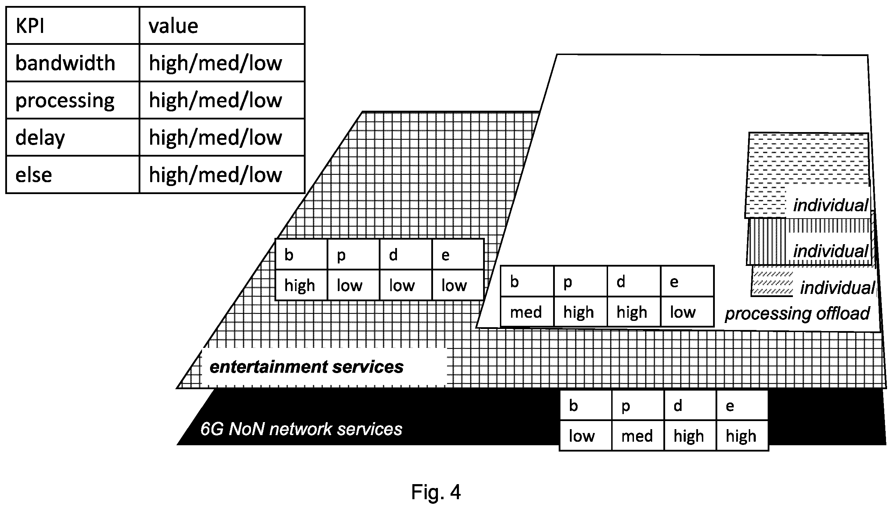

Fig. 4 shows an example for requirements of the services/applications. The requirements may be expressed as values of KPIs. In the example, the KPIs comprise bandwidth, delay and processing capabilities. If, for example, a service requires processing offload, likely its requirement on processing capabilities is high and likely also delay may be an issue (a high requirement on delay). Thus, hosts with this service will attach to those networks indicating fast access to data centers with high processing performance. Entertainment services likely have strong demands on bandwidth, and a specific 6G NoN service layer may have high demands on delay (and others). In the example of Fig. 4 (and the following figures), the values of the KPI are indicated as high, medium, or low. However, in some example embodiments, only two values (high/low) or more than three different values (such as numerical values) may be possible.

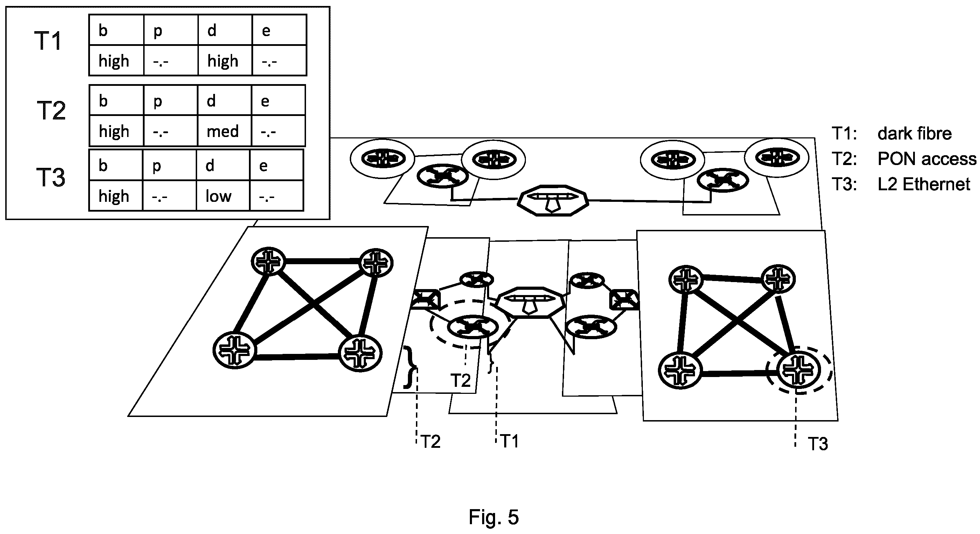

Fig. 5 provides a KPI view of different network layers. Here, three layers are shown: T1 - optical (dark fibre), T2 - PON access, and T3 - L2 switching access. On the left side, a list of the KPIs provided by the respective network layers is shown. In Fig. 5 (and in the following figures), the header "b, p, d, e" of the table means "bandwidth, processing power, delay, else", correspondingly to the required KPIs according to Fig. 4. However, these KPIs are just illustrative examples and other KPIs and/or a subset of these KPIs may be used in some example embodiments.

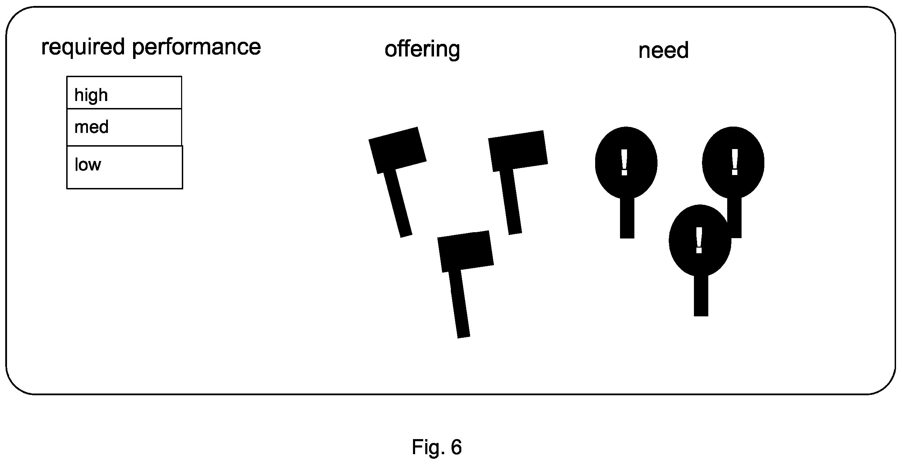

Fig. 6 illustrates symbols used in the following figures. The required performance is indicated by one of three values (high, medium, low). The network indicate the performance they provide by flags in corresponding hashing, and the higher layers (hosts, applications) show their need by signs in corresponding hashing.

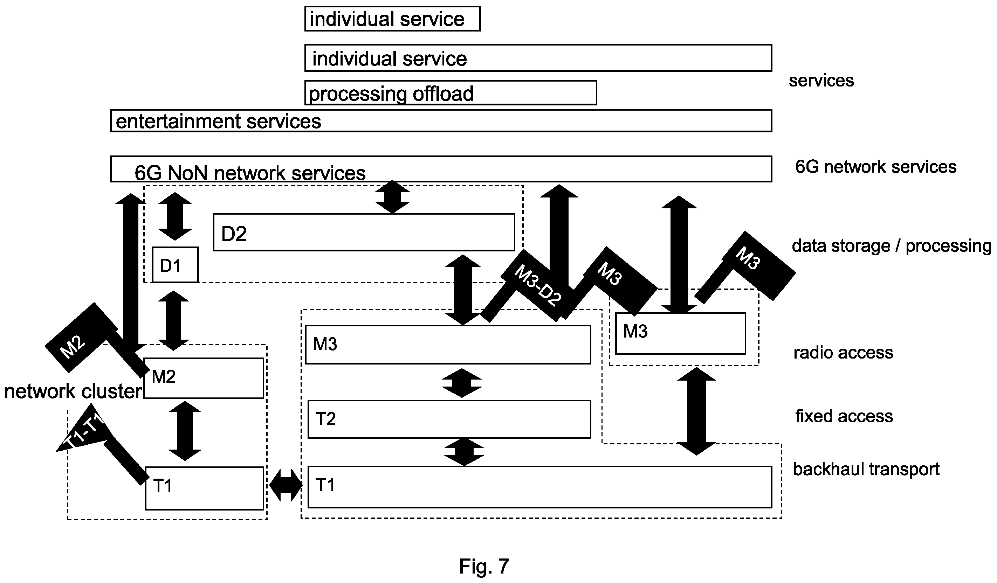

Fig. 7 corresponds to Fig. 3. Fig. 7 shows how networks indicate their capabilities to adjacent networks. For example, the network M2 can offer a certain KPI, which is based on the KPI M2 can offer by itself, adjusted by KPI inherited from the network T1. KPI indications via vertical interfaces are denoted as square-flags, those indicated via horizontal interfaces by triangle-flags.

A network operator contributing resources to a NoN may have different networks/network layers involved. For example, at the bottom left of the figure, a network operator may have a T1 transport network with an M2 radio access network, but he only wants to provide M2 access. Thus, he might want to hide the structure of his network (T1+M2). In this case, the contribution of this operator is a network cluster rather than a network (indicated by dotted lines).

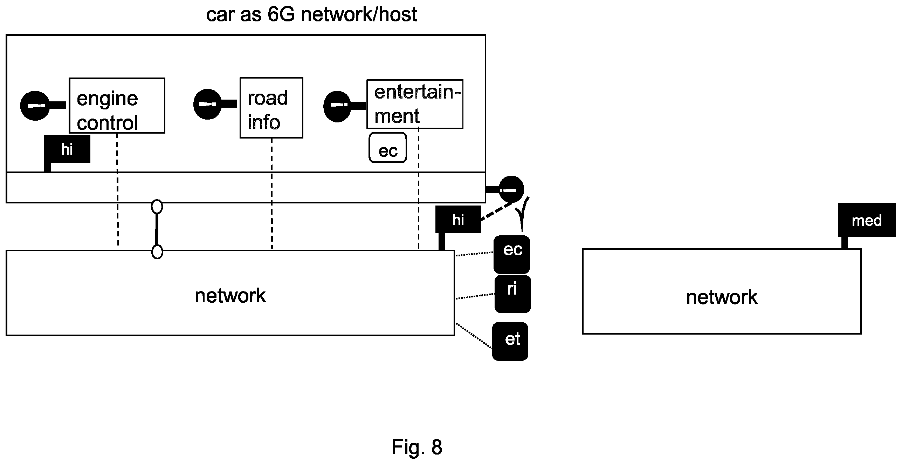

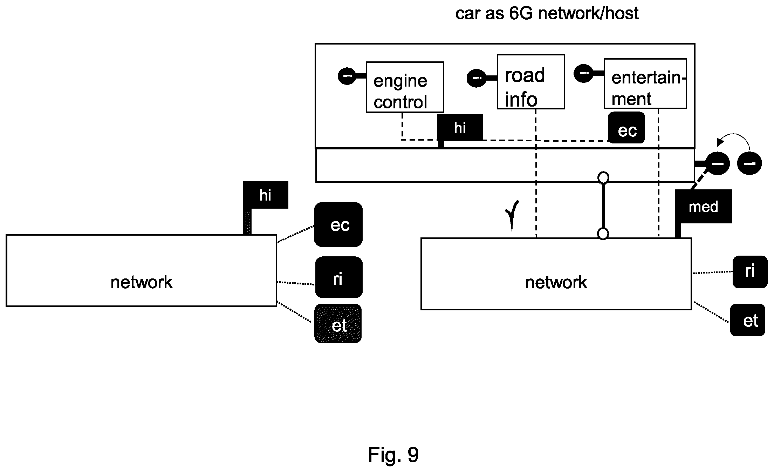

Figs. 8 and 9 show an example how a host may access a network based on its KPI needs. As a host, a car is shown with three applications of different KPI needs: engine control (needs high KPI value), roadside info (needs medium KPI value) and entertainment (needs low KPI value). All applications are communicating with a peer server running on the infrastructure of the NoN. In Fig, 8, the car is attached to a network providing the required KPI (high). The KPI may be e.g. the delay and/or the processing power.

In Fig. 9, the car has moved and can only connect to another network (or network cluster, respectively) which provides a "medium"-KPI. In this case, engine control (high KPI) cannot be supported via the NoN. Therefore, the car reduces its KPI need to "med" and serves the engine control by a local onboard engine control service instead. However, road info and entertainment may be provided by the other network.

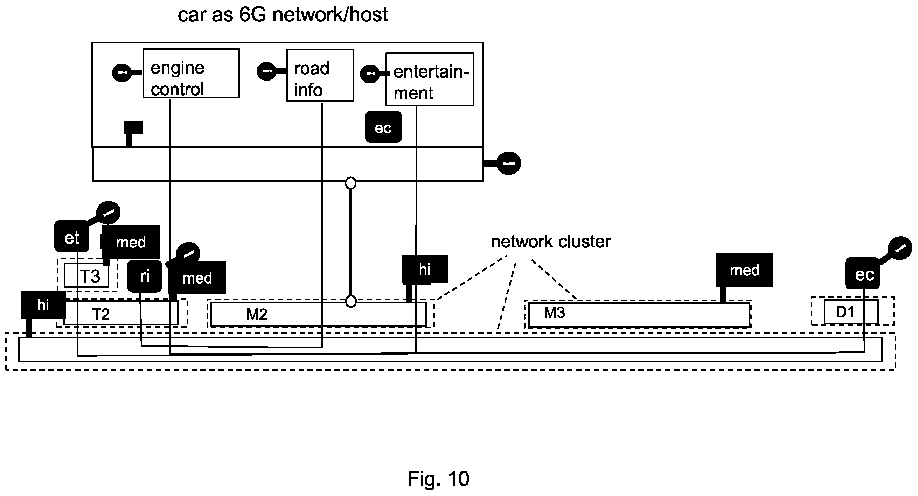

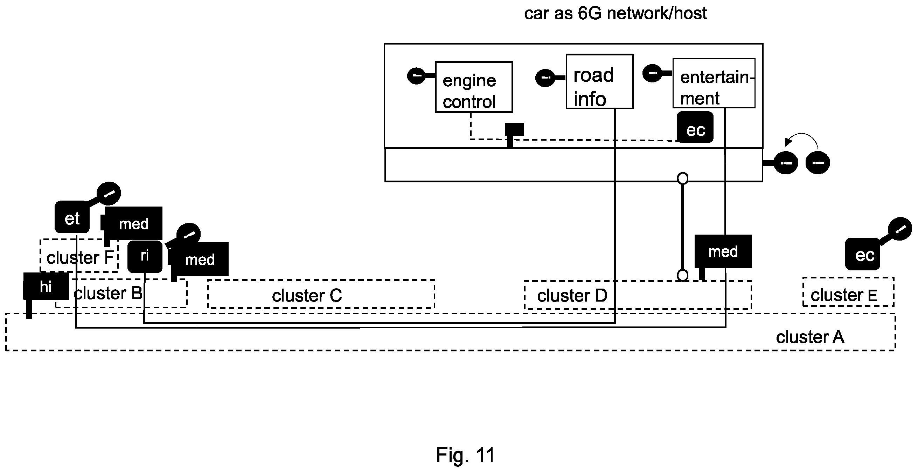

Figs. 10 and 11 show the same scenario as Figs. 8 and 9 in a network layer view. As shown in Fig. 10, before the handover to the other network, the application servers run on platforms that meet their related KPI: the entertainment server (low) runs on top of a T3 network (e.g., IP router) since delay may not play a role. The roadside info-server cannot run on a T3 network (e.g., due to delay issues), thus it is on top of a T2 network. The engine control service has highest demands (on processing performance and delay), thus it is in a data center D1 which is directly connected via dark fibre (network T1). The dotted lines indicate network clusters, however, in this example, each network forms its own cluster.

After the handover to the other network with "med"-KPI, as shown in Fig. 11, the car is supporting all applications with "high" performance demands by local servers (e.g., engine control). By this it may indicate a "high" flag to the onboard systems since the onboard system can cover all applications. On the other hand, its requirements to the NoN are reduced to medium now (for road information and entertainment). The NoN may fulfill these requirements via the other network.

Hereinafter, some business aspects of a NoN are considered.

A NoN may be established by an incumbent operator who collects resources from other network providers. However, the motivation to do so may be low on either side: a new network service may cannibalize existing incumbent business, and network providers might not be willing to provide resources to their competitors.

Thus, another player (broker) might act by collecting [spare] resources from network providers and establish a new network service such as a NoN. Network providers have [temporarily] unused network resources and make those available to a broker alongside with information on how to access and manage those. The provision and withdrawal of resources will be done by broker client/server functions comprising information about KPI, availability etc. In addition, the broker may run an own operation and maintenance system (OAM) which will incorporate resource information (where, how to access) provided by the OAM client function of the contributing networks.

However, the willingness of the network operators to provide resources to a broker who might raise a competitive service might be low. Rather, the network operators may leave some resources unused.

In a commercially more viable approach, [spare] resources may be provided mutually between network providers without a man-in-the-middle [broker] by using a broker-less approach. In this example, each network operator who wants to provide [spare] resources and also each network operator who needs additional resources for his own business can bargain resources (give or take) via merchant (give) and consumer (take) functions. Ideally, those functions are the same in all contributing networks. Resource handling (RC) between the merchants and consumers comprises information about access, configuration and availability (how long is a resource available).

This setup allows for resource sharing and thus for efficient use of resources. However, this setup does not allow for generating a NoN-specific type of service such as a citizen network.

A NoN providing both, resource sharing and operation of a NoN-specific [citizen] service may have an operational setup that
- does not mandate a man-in-the-middle for resource-sharing
- operates a Non-specific [citizen] service by a player which is trusted and operates without own profit. Such a NPA may be a governmental, National or European, authority, for example.

A non-profit altruistic operator NPA offers a NoN-specific network service such as a National or PAN-European citizen network while resource sharing, including those used for the citizen network can be exchanged by means of a broker-less NoN. This setup would also allow to start the service by a non-profit organization as incubator and to withdraw once the service is up and running.

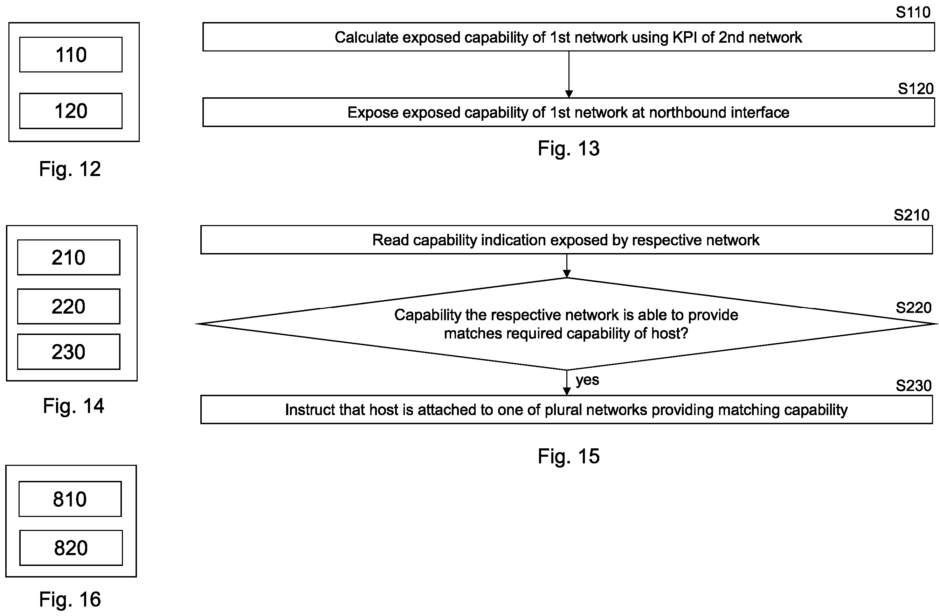

Fig. 12 shows an apparatus according to an example embodiment. The apparatus may be a network or an element thereof. Fig. 13 shows a method according to an example embodiment. The apparatus according to Fig. 12 may perform the method of Fig. 13 but is not limited to this method. The method of Fig. 13 may be performed by the apparatus of Fig. 12 but is not limited to being performed by this apparatus.

The apparatus comprises means for calculating 110 and means for exposing 120. The means for calculating 110 and means for exposing 120 may be a calculating means and exposing means, respectively. The means for calculating 110 and means for exposing 120 may be a calculator and exposer, respectively. The means for calculating 110 and means for exposing 120 may be a calculating processor and exposing processor, respectively.

The means for calculating 110 exposes an exposed capability of a first network (S110). The calculation of the capability is based on a capability inherent to the first network and a capability of a second network the first network is connected to.

The means for exposing 120 exposes the exposed capability of the first network at a northbound interface of the first network (S120).

Fig. 14 shows an apparatus according to an example embodiment. The apparatus may be a host (such as a UE) or an element thereof. Fig. 15 shows a method according to an example embodiment. The apparatus according to Fig. 14 may perform the method of Fig. 15 but is not limited to this method. The method of Fig. 15 may be performed by the apparatus of Fig. 14 but is not limited to being performed by this apparatus.

The apparatus comprises means for reading 210, means for checking 220, and means for instructing 230. The means for reading 210, means for checking 220, and means for instructing 230 may be a reading means, checking means, and instructing means, respectively. The means for reading 210, means for checking 220, and means for instructing 230 may be a reader, checker, and instructor, respectively. The means for reading 210, means for checking 220, and means for instructing 230 may be a reading processor, checking processor, and instructing processor, respectively.

The means for reading 210 reads, from each of plural networks, a capability indication exposed by the respective network (S210). The capability indication exposed by the respective network indicates a capability the respective network is capable to provide to a host if the host attaches to the respective network.

The means for checking 220 checks, for each of the plural networks, whether the capability the respective network is capable to provide matches a required capability of the host (S220). More precisely, the means for checking 220 checks, for each of the plural networks, whether the capability the respective network is capable to provide matches a required capability of an application of the host.

In response to checking that the capability a first one of the plural networks is capable to provide matches the required capability of the host (more precisely: of the application of the host; S220 = yes), the means for instructing 230 instructs that the host is attached to the first one of the plural networks (S230).

Fig. 16 shows an apparatus according to an example embodiment. The apparatus comprises at least one processor 810, at least one memory 820 storing instructions that, when executed by the at least one processor 810, cause the apparatus at least to perform the method according to at least one of the following figures and related description: Fig. 13 or Fig. 15.

Some example embodiments are explained with respect to 6G. However, other example embodiments may be employed in other 3GPP generations, such as 4G, 5G, 7G, etc..

One piece of information may be transmitted in one or plural messages from one entity to another entity. Each of these messages may comprise further (different) pieces of information.

Names of network elements, network functions, protocols, and methods are based on current standards, or are current proposals. These names are not limiting. For example, in other versions or other technologies, the names of these network elements and/or network functions and/or protocols and/or methods may be different, as long as they provide a corresponding functionality. The same applies correspondingly to the terminal.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example embodiments provide, for example, a network or an element thereof (which may or may not be actually integrated in the network), an apparatus embodying the same, a method for controlling and/or operating the same, and computer program(s) controlling and/or operating the same as well as mediums carrying such computer program(s) and forming computer program product(s). According to the above description, it should thus be apparent that example embodiments provide, for example, a host (such as a UE) or an element thereof (which may or may not be actually integrated in the host), an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred example embodiments. However, it should be noted that the description of the preferred example embodiments is given by way of example only and that various modifications may be made without departing from the scope of the disclosure as defined by the appended claims.

The terms "first X" and "second X" include the options that "first X" is the same as "second X" and that "first X" is different from "second X", unless otherwise specified. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. The term "or" refers to a non-exclusive "or" unless otherwise indicated (e.g., use of "or else" or "or in the alternative").

## Claims

1. Apparatus comprising:
means for calculating an exposed capability of a first network based on a capability inherent to the first network and a capability of a second network the first network is connected to;
means for exposing the exposed capability of the first network at a northbound interface of the first network.

2. The apparatus according to claim 1, wherein the first network is stacked on the second network.

3. The apparatus according to claim 1, wherein the first network and the second network are in parallel at a same layer.

4. The apparatus according to any of claims 1 to 3, wherein the first network is capable to provide at least one of:
- a respective communication path from a first host to a second host if the first host is attached to the first network, or
- the first network and the second network are jointly capable to provide a respective communication path from the first host to a third host through the first network and the second network if the first host is attached to the first network.

5. Apparatus comprising:
means for reading, from each of plural networks, a first capability indication exposed by the respective network, wherein the first capability indication exposed by the respective network indicates a first capability the respective network is capable to provide to a first host if the first host attaches to the respective network;
means for checking, for each of the plural networks, whether the first capability the respective network is capable to provide matches a required first capability of a first application of the first host;
means for instructing that the first host is attached to a first one of the plural networks in response to checking that the first capability the first one of the plural networks is capable to provide matches the required first capability of the first application of the first host.

6. The apparatus according to claim 5, further comprising:
means for inhibiting the instructing that the first host is attached to the first one of the plural networks in response to checking that the first capability the first one of the plural networks is capable to provide does not match the required first capability of the first application of the first host.

7. The apparatus according to any of claims 5 and 6, wherein the first capability the first one of the plural networks is capable to provide matches the required first capability of the first host if the first capability the first one of the plural networks is capable to provide is equal to or better than the required first capability of the first application of the first host.

8. The apparatus according to any of claims 5 to 7, further comprising:
means for monitoring whether the means for checking checks, for each of the plural networks, that the first capability the respective network is capable to provide does not match the required first capability of the first application of the first host;
means for ordering the first host to reduce the required first capability of the first application of the first host to a reduced required first capability such that the first capability the first one of the plural networks is capable to provide matches the reduced required first capability in response to monitoring that the means for checking checks, for each of the plural networks, that the first capability the respective network is capable to provide does not match the required first capability of the first application of the first host;
means for supervising whether a confirmation is received that the first host reduces the required first capability to the reduced required first capability; wherein
the means for instructing is configured to instruct that the first host is attached to the first one of the plural networks in response to receiving the confirmation that the first host reduces the required first capability to the reduced required first capability.

9. The apparatus according to claim 8, further comprising:
means for commanding the first host to stop the first application on the first host requiring at least a portion of the required first capability in response to supervising that the confirmation is not received.

10. The apparatus according to any of claims 5 to 7, further comprising:
means for monitoring whether the means for checking checks, for each of the plural networks, that the first capability the respective network is capable to provide does not match the required first capability of the first application of the first host;
means for commanding the first host to stop the first application on the first host requiring at least a portion of the required first capability in response to monitoring that the means for checking checks, for each of the plural networks, that the first capability the respective network is capable to provide does not match the required first capability of the first application of the first host.

11. The apparatus according to any of claims 5 to 10, wherein
the means for reading is configured to read, from each of the plural networks, a second capability indication exposed by the respective network, wherein the second capability indication exposed by the respective network indicates a second capability the respective network is capable to provide to the first host if the first host attaches to the respective network;
the means for checking is configured to check, for each of the plural networks, whether the second capability the respective network is capable to provide matches a required second capability of a second application of the first host;
the means for instructing is configured to instruct that the first host is attached to a second one of the plural networks in response to checking that the second capability the second one of the plural networks is capable to provide matches the required second capability of the second application of the first host;
the second one of the plural networks is different from the first one of the plural networks.

12. The apparatus according to any of claims 5 to 11, wherein, for each of the plural networks, the first capability the respective network is capable to provide comprises providing a communication path from the first host to a second host if the first host is attached to the respective network.

13. Method comprising:
calculating an exposed capability of a first network based on a capability inherent to the first network and a capability of a second network the first network is connected to;
exposing the exposed capability of the first network at a northbound interface of the first network.

14. Method comprising:
reading, from each of plural networks, a first capability indication exposed by the respective network, wherein the first capability indication exposed by the respective network indicates a first capability the respective network is capable to provide to a first host if the first host attaches to the respective network;
checking, for each of the plural networks, whether the first capability the respective network is capable to provide matches a required first capability of a first application of the first host;
instructing that the first host is attached to a first one of the plural networks in response to checking that the first capability the first one of the plural networks is capable to provide matches the required first capability of the first application of the first host.

15. A computer program product comprising a set of instructions which, when executed on an apparatus, is configured to cause the apparatus to carry out the method according to any of claims 13 or 14.
